# EUROPEAN PATENT APPLICATION

(11) **EP 3 415 001 A1**
(43) Date of publication of application: **19.12.2018**
(21) Application number: 16889681.9
(22) Date of filing: 29.12.2016
(51) Int. Cl.: A01K 31/06

(54) **MULTI-TIERED CAGE SYSTEM FOR KEEPING AND RAISING POULTRY**

(30) Priority: 11.02.2016 BY 20160041
(71) Applicant: Sovmestnoe Zakrytoe Aktsionernoe Obshchestvo "Servolux", Mogilev 212030 (BY)
(72) Inventor: SINITSA, Yauheni Nikolaevich, Mogilevskaya obl. 213136 (BY)
(74) Representative: Zaboliene, Reda
(86) International application number: PCT/BY2016/000008
(87) International publication number: WO 2017/136912

(57) **Abstract**

The utility model relates to the cage systems for keeping and raising poultry, primarily broiler chickens. Multi-tiered cage system for keeping and raising poultry contains a multi-tiered frame, drinking and feeding systems mounted on each tier of the frame, multi-tiered belt conveyor, the unloading device. The system is characterized in that the unloading device is comprised of a lateral guides mounted on vertical metal support racks of frame on each tier parallel to the conveyor belt motion line above the level of the conveyor belt and below the floor level of the cage sections throughout the tier of the frame and one or two boxes installed under each cage section or under separate cage sections on the conveyor belt moving freely along the lateral guides. Preferred embodiments of the poultry unloading device envisage specific positions of the lateral guides, the possibility of installing central guides and having the guides in the boxes to install floors of the cage sections into them.

## Description

The utility model relates to the cage systems for keeping and raising poultry, primarily broiler chickens, and is intended for usage in the field of industrial poultry keeping.

There are several types multi-tiered cage systems for keeping and raising poultry containing a multi-tiered frame, which are used today, having unloading devices via multi-tiered belt conveyors obtaining the function of brood removal and birds' unloading [Broiler signals: A practical guide / Ed. Ton van Shi, D.Audkerk. - Tsutfen.: Roodbont Publichers B.V., 2014.].

The most similar device, having the same functionality, is the multi-tiered cage system "Farmer Automatic Broiler System" [Broiler. Growing System for Broilers [Electronic resource] / Farmer Automatic GmbH & Co. KG. - Mode of access: http://www.farmerautomatic-inc.com/fileadmin/user_upload/farmer/downloads/ FA_Broiler_07-2013_US.pdf. - Date of access: 09.02.2016.]. The cage row of the abovementioned cage system is made in the form of a multi-tiered structure of vertical metal supporting racks fastened together and horizontal transverse and longitudinal metal profiles, each tier contains a cage divided in sections separated with partitions and equipped with sliding doors from the outside, with feeding and drinking systems for birds. The poultry unloading device is characterized by the presence of a multi-tiered belt conveyor installed in such a way that the conveyor belt is located on each tier under the cage, and each cage section is equipped with a sliding floor surface installed on the guiding rails. Poultry unloading from the cages is performed by sliding extension of the floor surface of the cage section and moving the bird on the conveyor from the cage row. The unloading device operates in such a way that a bird is transported to the end of the cage row and then enters the loading area from which the operator manually catches the bird and moves it to the box located on the corresponding platform. After filling the box with poultry, the box is removed from the poultry house.

The disadvantage of the poultry unloading system of the multi-tiered cage system "Farmer Automatic Broiler System" is the large amount of manipulations with poultry which increases the stressful condition of birds, as well as the risks of injury, the labor intensity of the unloading process, due to the need to control the filling of boxes in manual mode. In particular, when the floor of the cage section extends, a bird, falling on the conveyor belt, suffers from a stress, beginning to move its wings, while moving from the cage row, a bird can move freely along the conveyor belt.

Birds can step on each other, tearing skin with claws and injuring other birds, or they can have a contact with the frame and the cages. In such stressful conditions, birds can start to go in the opposite direction from the direction of movement of the belt conveyor, causing crush, which can lead to injury and lowering the quality of poultry meat or the death of birds. Due to the structure of the poultry unloading system of the multi-tiered cage system, the need of manual control over the filling of boxes with poultry increases labor costs, and slows down the unloading process. This is especially obvious when we look at unloading of small birds (for example, broiler chickens at the early stages of growing) from poultry cages, which may be caused, for example, by the need for moving into other cages and/or facilities which the technology used for growing poultry can require.

The technical problem solved by the multi-tiered cage system for keeping and raising poultry is the reduction of traumatism and death of poultry during unloading from the cages of the multi-tiered cage system for keeping and raising poultry, reduction of labor costs associated with the unloading process, acceleration the unloading process decreasing energy losses at the same time.

The task is achieved by excluding the possibility of free movement of poultry along the conveyor belt and the need for manual control of the boxes filling with poultry due to the fact that the multi-tiered cage system for keeping and raising poultry is a multi-tiered frame made of vertical metal support racks and horizontal longitudinal and transverse metal profiles fastened thereto. Each tier of the frame contains a cage located in the upper part of the tier, divided by transverse and longitudinal partitions into two rows of cage sections. The system includes the drinking system, the feeding system, the multi-tiered belt conveyor, installed in such a way that the conveyor belt of the corresponding tier of the belt conveyor is located at the bottom of each tier of the frame under the cage, the unloading device. Each cage section contains a floor installed in the guides with the possibility of extension, as well as the doors installed from the outside. The system is also characterized by the specific feature which can be described as follows: the unloading device is comprised of a lateral guides mounted on vertical metal support racks of the frame on each tier parallel to the conveyor belt motion line above the level of the conveyor belt and below the floor level of the cage sections throughout the tier of the frame and one or two boxes installed under each cage section or under separate cage sections on the conveyor belt moving freely along the lateral guides, the height of each box corresponds to the growth stages of poultry at the time of its unloading from the cages or exceeds it, each box in width corresponds to the width of the cage section, each box or two boxes jointly along the length correspond to the length of the cage section.

The technical result is the following: as the size of the cage section corresponds in length and width to the size of the box, or when the unloading device is installed under the cage section of the two boxes, it corresponds to the length and width with the corresponding sizes of the two boxes, then when poultry is unloaded after extension of the floors of cage sections it is evenly distributed in the boxes and does not require additional manual manipulation and control over the boxes filling. As poultry after falling into the boxes is locked in a limited space, limited group, this reduces stress, eliminates uncontrolled movement of poultry along the conveyor belt, decreasing the amount of injuries and death of poultry, which allows to increase the rate of poultry unloading, as well as reduces the associated labor costs.

The advantage also has a multi-tiered cage system for keeping and raising poultry with the lateral guides having a height of at least 2 cm and are installed with a clearance of at least 3 cm from the level of the floor of the cage sections of the corresponding tier in such a manner that the upper part of the lateral guides is located on at least 1 cm above the top surface of the box, the lower part of the lateral guides is located on not less than 1 cm below the top surface of the box. Such structure of the multi-tiered cage system for keeping and raising poultry, equipped with extendable floors of cage sections, makes it possible to install extended floors of cage sections on boxes and thus cover up the poultry in the boxes, excluding the possibility of its vertical movement and contact with the elements of the frame and cages. An additional technical result is the simplification of the cage cleaning process, since the floors of the cage sections are removed from the cage row together with the boxes and can be taken for cleaning.

The advantage also has a multi-tiered cage system for keeping and raising poultry where the boxes contain in the upper part the guides for installation in the boxes of the cage floors, the lateral guides of the frame are installed below the level of the boxes' guides. Such structure of the multi-tiered cage system for keeping and raising poultry, equipped with extendable floors of cage sections, allows to install the extendable floors of cage sections directly into the boxes' guides, ensuring their fastening while moving the boxes along the conveyor belt, and also it is possible to limit the height of the tier as much as possible because there is no need for a substantial free space between the top of the boxes and the bottom of the cages.

The advantage also has a multi-tiered cage system for keeping and raising poultry which additionally has on each tier of the frame a central guide mounted on the frame under the cage along the line of dividing the cage into two rows of cage sections, having a height of at least 2 cm and arranged in such a manner that the lower part of the central guide is located not less than 1 cm below the top surface of the box. Such structure of the multi-tiered cage system for keeping and raising poultry further limits the possibility of transverse displacement of the boxes relative to the conveyor belt motion line. An additional technical result is the ability to unload poultry from the cage sections of one row irrespective of the poultry unloading from the cage sections of the other row of the corresponding cage.

The general layout of the proposed multi-tiered cage system for keeping and raising poultry is depicted at the following graphic images.
Figure 1 - General view of the multi-tiered cage system for keeping and raising poultry.
Figure 2 - Outside view of the tier of the multi-tiered cage system for keeping and raising poultry.
Figure 3 - Front view of the tier of the multi-tiered cage system for keeping and raising poultry.

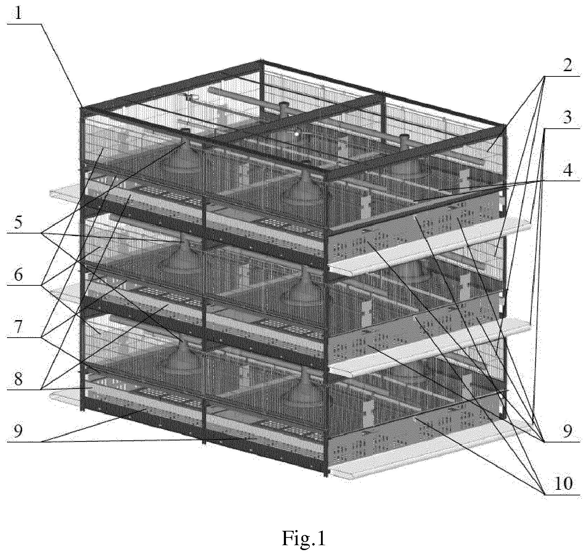

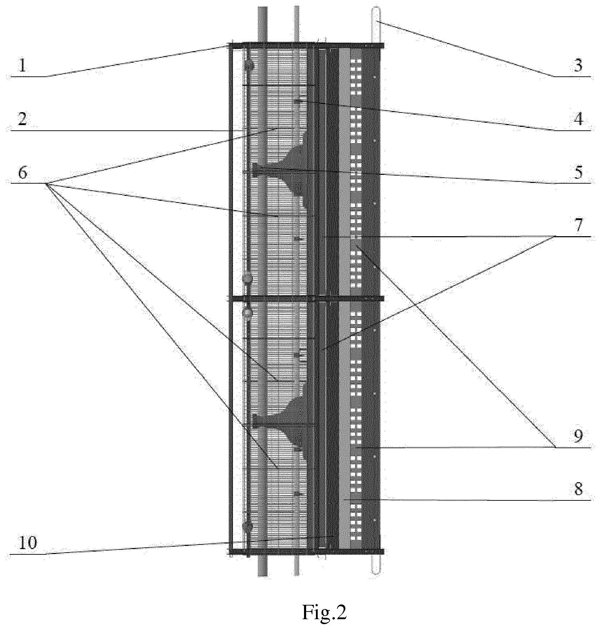

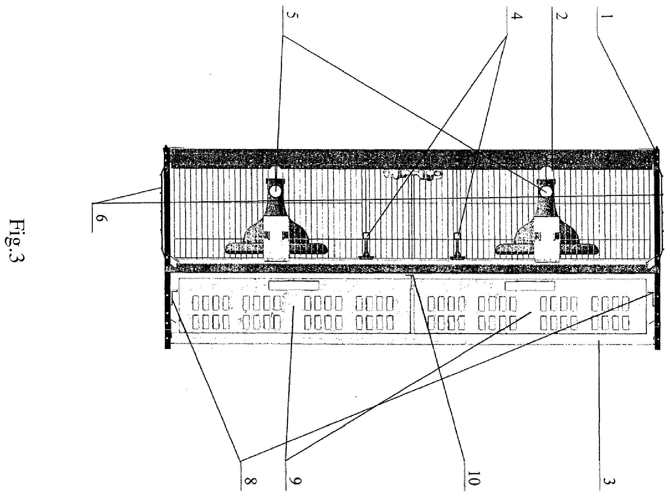

The Figure 1 shows an exemplary variant of the multi-tiered cage system for keeping and raising poultry in an advantageous embodiment, wherein the system further comprises the central guide, and the boxes comprise the guides at the top. Figures 2 and 3 further show outside view and front view of one tier of the system. The multi-tiered cage system for keeping and raising poultry in this modification is a three-tiered frame 1 made of vertical metal support racks and horizontal longitudinal and transversal metal profiles fastened thereto. Each tier of the frame 1 contains the cage 2 located in the upper part of the tier, divided by transverse and longitudinal cage partitions into two rows of cage sections. Each of the cage sections contains the extendable floor 7 installed in the guides and the sliding net doors 6 installed from the outside. The multi-tiered cage system for keeping and raising poultry contains the drinking system 4, the feeding system 5, the multi-tier belt conveyor. The conveyor belt 3 of the corresponding tier of the belt conveyor is located at the bottom of each tier of the frame 1 below the cage 2. On the vertical metal support racks of the frame 1, on each tier, parallel to the conveyor belt 3 motion line, above the level of the conveyor belt 3 and below the floor 7 level of the cage sections along the length of the whole tier of the frame 1, lateral guides 8 are installed, under each cage section on the conveyor belt 3 there is one box 9 with the guides to install floors 7 of the cage sections. The boxes 9 are mounted with the ability to move freely along the lateral guides 8. The height of each box 9 corresponds to the growth stages of the poultry at the time of its unloading from the cages 2 or exceeds it, which can usually be from 10 to 25 cm, each box 9 in width corresponds to the width of the cage section, each box 9 along the length corresponds to the length of the cage section. In other embodiments, the multi-tiered cage system for keeping and raising poultry may contain two boxes under each cage section. On the frame 1 on each tier under the cage 2 along the line of division of cage 2 into two rows of the cage sections, there is a central guide 10 having a height of at least 2 cm and arranged in such a manner that the lower part of central guide 10 is located not less than 1 cm below the top surface of the box 9.

The multi-tiered cage system for keeping and raising poultry works as follows: The poultry is kept and raised in the multi-tiered cage system for keeping and raising poultry until it is unloaded within the time period according to the applied technology of growing. In case of unloading the poultry from the cages 2 of the multi-tiered cage system for keeping and raising poultry, the floors 7 of the cage sections extend, then poultry falls into the boxes 9 placed under them on the conveyor belt 3. Further by means of the belt conveyor, the boxes 9 installed on the conveyor belt 3 and filled with poultry are moved from the multi-tiered cage system for keeping and raising poultry. In this case, the lateral guides 8 limit the longitudinal displacement of the boxes 9 relative to the conveyor belt 3 motion line and eliminate the contact of the boxes 9 moved on the conveyor belt 3 with the vertical support racks of the frame 1.

In the preferred embodiment of the multi-tiered cage system for keeping and raising poultry, in which the lateral guides 8 have a height of at least 2 cm and are installed with a clearance of at least 3 cm from the level of the floor of the cage sections of the corresponding tier in such a manner that the upper part of the lateral guides 8 is located not less than 1 cm above the top surface of the box 9, the lower part of the lateral guides 8 is located not less than 1 cm below the top surface of the box 9, the system can also operate in such a way that the floors 7 of the cage sections after their extension are laid on the correspondent boxes 9, covering a poultry that is inside. Then, by means of the belt conveyor, the boxes 9 installed on the conveyor belt 3 and filled with poultry are carried together with the floors 7 of the cage sections laid on them from the multi-tiered carry system for keeping and raising poultry. In this case, the lateral guides 8 also serve as guides for the cage floors 7 located on the boxes 9 when they move together with the boxes 9 on the conveyor belt 3 and exclude the contact of these floors 7 with the vertical support racks of the frame 1.

In the preferred embodiment of the multi-tiered cage system for keeping and raising poultry, in which the boxes 9 contain the guides in the upper part for the installation the floors 7 of the cage sections into the boxes 9, the lateral guides 8 of the frame 1 are set below the level of the guides of box 9, the system can also operate in such a way that the floors 7 of the cage sections after their extension are installed in the boxes' 9 guides. Then, by means of the belt conveyor the boxes 9 installed on the conveyor belt 3 and filled with the poultry are moved together with the floors 7 of the cage sections installed in their guides from the multi-tiered cage system of keeping and raising poultry. In this case, the lateral guides 8 limit the longitudinal displacement of the boxes 9 together with the floors 7 installed in their guides relative to the conveyor belt 3 motion line and exclude the contact of the boxes 9 together with the floors 7 installed in their guides moved on the conveyor belt 3 with the vertical racks of frame 1.

## Claims

1. A multi-tiered cage system for keeping and raising poultry is a multi-tiered frame made of vertical metal support racks and horizontal longitudinal and transverse metal profiles fastened thereto, each tier contains a cage located in the upper part of the tier, divided by transverse and longitudinal partitions into two rows of cage sections, each cage section contains a floor installed in the guides with the possibility of extension, as well as the doors installed from the outside, the system includes the drinking system, the feeding system, the multi-tiered belt conveyor, installed in such a way that the conveyor belt of the corresponding tier is located at the bottom of each tier of the frame under the cage, the unloading device, the system is also **characterized by** the specific feature which can be described as follows: the unloading device is comprised of a lateral guides mounted on vertical metal support racks of frame on each tier parallel to the conveyor belt motion line above the level of the conveyor belt and below the floor level of the cage sections throughout the tier of the frame and one or two boxes installed under each cage section or under separate cage sections on the conveyor belt moving freely along the lateral guides, the height of each box corresponds to the growth stages of poultry at the time of its unloading from the cages or exceeds it, each box in width corresponds to the width of the cage section, each box or two boxes jointly along the length correspond to the length of the cage section.

2. The system according to claim 1 **characterized in that** the lateral guides have a height of at least 2 cm and are installed with a clearance of at least 3 cm from the level of the floor of the cage sections of the corresponding tier in such a manner that the upper part of the lateral guides is located on at least 1 cm above the top surface of the box, the lower part of the lateral guides is located not less than 1 cm below the top surface of the box.

3. The system according to claim 1 **characterized in that** the boxes contain in the upper part the guides for installation of the floors of the cages in the boxes, the lateral guides of the frame are installed below the level of the guides of the box.

4. The system according to claim 1 or claim 2 or claim 3 **characterized in that** on each tier of the frame it has a central guide mounted on the frame under the cage along the line of dividing the cage into two rows of cage sections, having a height of at least 2 cm and arranged in such a manner that the lower part of the central guide is located not less than 1 cm below the top surface of the box.
